# EUROPÄISCHE PATENTANMELDUNG

(11) **EP 1 950 091 A2**
(43) Veröffentlichungstag der Anmeldung: **30.07.2008**
(21) Anmeldenummer: 08100360.0
(22) Anmeldetag: 11.01.2008
(51) Int. Cl.: B60R 7/00, B60R 11/06, A47B 47/02, B60R 11/00

(54) **Regalschrank-System für den Einbau in einem Kraftfahrzeug**

(30) Priorität: 26.01.2007 DE 202007001187 U
(71) Anmelder: SORTIMO INTERNATIONAL AUSRÜSTUNGSSYSTEME FÜR SERVICEFAHRZEUGE GmbH, D-86441 Zusmarshausen (DE)
(72) Erfinder: Stegherr, Franz, 86391 Stadtbergen (DE)
(74) Vertreter: Zipse Habersack Kritzenberger

(57) **Zusammenfassung**

Die Erfindung betrifft ein Regalschrank-System (10) für den Einbau in einem Kraftfahrzeug, wobei das Regalschrank-System (10) eine daran festlegbare Verzurrschiene (20) aufweist.

## Beschreibung

Die Erfindung betrifft ein System in Form eines Regals oder eines Schranks oder einer Kombination hieraus für den Einbau in einem Kraftfahrzeug.

Im Stand der Technik sind Regalschrank-Systeme beispielsweise gemäß der DE 103 47 750.0 der Anmelderin bekannt. Derartige Regalschrank-Systeme sind zum Aufbewahren von Kleingegenständen wie beispielsweise Werkzeug gedacht. Insofern sind diese Systeme in Kleintransportern von insbesondere Handwerksbetrieben eingesetzt. Neben der Mitnahme von in Regalen oder Schubladen unterbringbarem Gut ist oft auch ein größerer Gegenstand in dem Kraftfahrzeug mitzuführen, der am Boden stehend gegen ein Verschieben zu sichern ist. Eine solche Sicherung wird mit sog. Verzurrschienen bewerkstelligt, die an der Karosserie des Fahrzeugs montiert werden. An dieser Verzurrschiene lassen sich Verzurr-Bänder festlegen, mit denen das zu sichernde Gut im Fahrzeuginnenraum gehalten wird.

Aufgabe der Erfindung ist es, ein Einbausystem zur Mitnahme von Waren unterschiedlichster Größe in einem Kraftfahrzeug vorzusehen.

Diese Aufgabe ist erfindungsgemäß mit einem Regalschrank-System gelöst, wie es im folgenden Anspruch 1 beansprucht ist. Vorteilhafte Weiterbildungen der Erfindung gehen aus den nachfolgenden Unteransprüchen hervor.

Grundidee der Erfindung ist es damit, eine Kombination aus Regalschrank-System und Verzurrschiene vorzusehen, welches System für den Einbau in einem Kraftfahrzeug konstruiert ist. Mit anderen Worten umfasst das RegalSchrank-System neben Schubladen und Regalfächern, bzw. Regalwannen eine an dem Regalschrank-System integrierte Verzurrschiene. Diese ist vorteilhaft im Bodenbereich des Regalschrank-Systems angeordnet.

Die Verzurrschiene weist herkömmliche Anlenkungspunkte zur Fixierung von Verzurr-Bändern auf. Dies können beispielsweise Löcher, Langlöcher oder Ankernasen sein, an denen beispielsweise Haken eines Verzurr-Bandes eingehängt, bzw. eingeklingt werden können. Neben einer Anordnung der Verzurrschiene im Bodenbereich des Regalschrank-Systems ist eine Fixierung der Verzurrschiene am Regalschrank-System auf vertikal höherem Niveau ebenso möglich. Diesbezüglich können beispielsweise Verzurrschienen unterschiedlicher Länge für die Fixiering bzw. Integration an unterschiedlichen Stellen des Regalschrank-Systems vorgesehen sein, und zwar sowohl in horizontaler Anordnung bezogen auf die Längsachse der Verzurrschiene als auch in vertikaler Anordnung derselben.

Die Verzurrschiene lässt sich vorteilhaft in analoger Weise wie die anderen Einsatzelemente des Regalschrank-Systems an diesem montieren. Dies geschieht beispielsweise durch Verschraubung an den Regalholmen bzw. an Querstreben des Regalschrank-Systems.

Gemäß einer vorteilhaften Ausführungsform der Erfindung ist die Verzurrschiene eine im Bodenbereich des Regalschrank-Systems hieran festgelegte Querstrebe des Regalschrank-Systems. Neben der Möglichkeit einer Verzurrung von Ladegut an der Schiene schafft diese Anordnung überdies eine weitere Stabilität des Regalschrank-Systems.

Gemäß einer weiteren vorteilhaften Ausführungsform ist das Regalschrank-System dadurch gekennzeichnet, dass die Verzurrschiene ein Dreiecksprofil ist, wobei die mit Verzurranlenkungspunkten versehene Frontfläche der Schiene in einem Winkel schräg nach oben positionierbar ist. Dies hat den Vorteil, dass ein Einhängen der Verzurr-Bänder durch diese Ausführung vereinfacht ist, da die Verzurranlenkungspunkte der Bedienperson zugewandt sind.

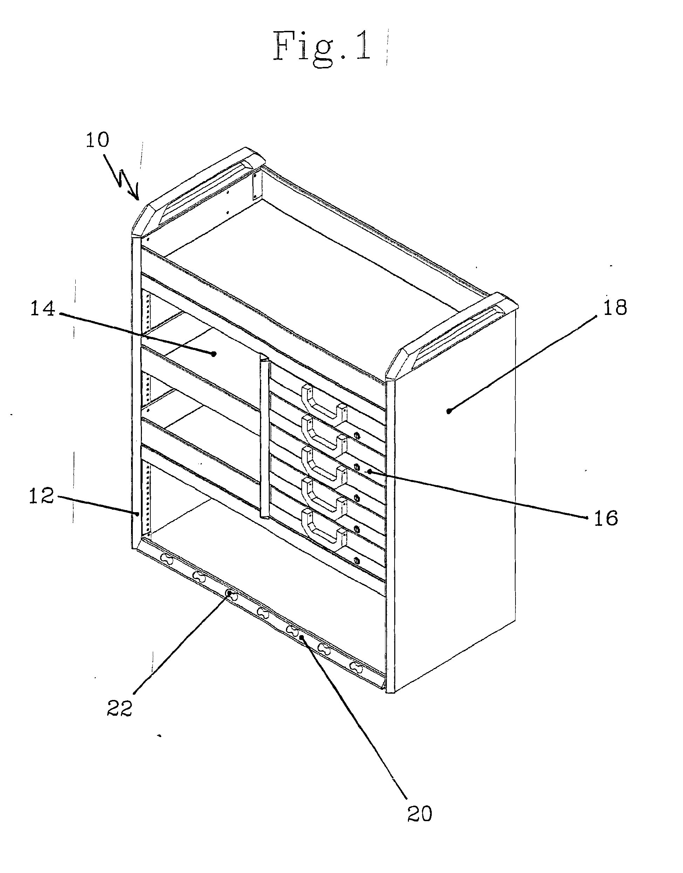

Die Erfindung wird nachfolgend mit Bezug auf die beigefügte Zeichnung näher beschrieben, in der
- Fig. 1 ein erfindungsgemäßes Regalschrank-System mit integrierter Verzurrschiene zeigt.

In Figur 1 ist ein Regalschrank-System 10 gezeigt, wie es beispielsweise in Kleintransportern eingebaut werden kann. Das Regalschrank-System umfasst vertikale Regalschrank-Holme 12, an denen weitere Querstreben so angeordnet sind, dass beispielsweise Schubladenelemente 16 oder Regalfächer 14 eingesetzt werden können. Das in Figur 1 gezeigte Regalschrank-System weist seitliche Blenden 18 auf, die das System zur Seite hin abschließen. In der gezeigten Ausführungsform ist eine Verzurrschiene 20 im Bodenbereich des Regalschrank-Systems angeordnet. Die Verzurrschiene 20 ist an den vertikalen Regalschrank-Holmen 12 angelenkt und fixiert. Damit dient die Verzurrschiene 20 als Querstrebe des Systems und stabilisiert dieses. Das gezeigte Ausführungsbeispiel der Verzurrschiene 20 weist Verzurrlöcher 22 auf, in die jeweils Verzurrbänder eingehakt werden können. Ist das Regalschrank-System in einem Kraftfahrzeug eingebaut, lassen sich im Bodenbereich des Fahrzeuges größere Ladegegenstände an der gezeigten Verzurrschiene 20 fixieren.

## Patentansprüche

1. Regalschrank-System (10) für den Einbau in einem Kraftfahrzeug,
**dadurch gekennzeichnet, dass** das Regalschrank-System (10) eine daran festlegbare Verzurrschiene (20) aufweist.

2. Regalschrank-System nach Anspruch 1,
**dadurch gekennzeichnet, dass** die Verzurrschiene (20) eine im Bodenbereich des Regalschrank-Systems (10) festgelegte Querstrebe des Systems ist.

3. Regalschrank-System nach Anspruch 1 oder 2,
**dadurch gekennzeichnet, dass** die Verzurrschiene (20) ein Dreiecksprofil ist, wobei die mit Verzurranlenkungspunkten (22) versehene Frontfläche der Schiene in einem Winkel schräg nach oben positionierbar ist.
